(19) Europäisches Patentamt
European Patent Office
Office européen des brevets

(11) **EP 3 370 341 A1**

(12) **EUROPEAN PATENT APPLICATION**

(43) Date of publication:
**05.09.2018 Bulletin 2018/36**

(51) Int Cl.:
**H03M 13/13** $^{(2006.01)}$

(21) Application number: **17158897.3**

(22) Date of filing: **02.03.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: HUAWEI TECHNOLOGIES CO., LTD.
**Shenzhen Guangdong 518129 (CN)**

(72) Inventors:
• **LIU, Ling**
  **London, SW7 2AZ (GB)**
• **LING, Cong**
  **London, SW7 2AZ (GB)**
• **KANG, Xin**
  **Shenzhen, Guangdong 518129 (CN)**

(74) Representative: Gill Jennings & Every LLP
**SAH**
**The Broadgate Tower**
**20 Primrose Street**
**London EC2A 2ES (GB)**

Remarks:
Amended claims in accordance with Rule 137(2) EPC.

(54) **POLAR CODE ENCODING FOR FADING CHANNEL**

(57) An encoder is provided that is configured to convert at least one original channel to a plurality of output channels using a single polar code or a polar lattice. The single polar code is based on a varying fading state of the original channel. The encoder is thus able to convert the original fading channel into output channels via polarisation in such a way that the polarisation takes account of the varying fading state of real-world channels. The encoder might be configured to perform encoding in presence of an eavesdropping channel and might insert random bits at specific indices of the polar code in order to increase security.

Figure 4

**Description**

This invention relates to an encoder and a method for converting an original channel to multiple output channels using a polar code.

Polar codes are the first explicit codes which can be proved to achieve the channel capacity of binary-input memoryless symmetric channels (BMS channels) with low encoding and decoding complexity. These codes rely on "channel polarisation". This technique constructs multiple equivalent output channels from an original channel, where those multiple output channels polarise in the extreme to being either purely noisy or purely noiseless. As the block length of polar codes increases, the capacities of the output channels polarize to either to 0 or 1. As the block length goes to infinity, the proportion of output channels with capacity 1 equals the original channel capacity. This means that the original channel capacity can be achieved just by transmitting information bits through the good output channels, with dummy bits being transmitted over the bad output channels.

Polar codes are an attractive option for coding over many types of channel, including wiretap channels, broadcast channels, multiple access channels, compound channels and even quantum channels. They have also been used for compression.

There has been some progress in designing polar codes for fading channels. "Polar Coding for Fading Channels: Binary and Exponential Channel Cases" by Si et al (IEEE Trans. Commun., vol. 62, no. 8, pp. 2638-2650, Aug. 2014) describes a hierarchical scheme in which a polar code is constructed via two stages of polarisation. In the first stage, the original channel is polarised into a set of extremal sub-channels that are treated as a set of binary erasure channels (BEC). The second stage involves polarising the synthesised BECs to a set of output binary symmetric channels (BSC). In addition to requiring two stages of polarisation, this technique requires a much longer block length than standard polar codes to achieve secrecy capacity. The block length of polar codes is required to be $NB$ for this technique, where $B$ is the number of blocks and $N$ is the block length of standard polar codes (see "Channel polarisation: A method for constructing capacity achieving codes for symmetric binary input memoryless channels" by Arikan, IEEE Trans. On Information Theory, vol. 59, no. 12, pp. 3051-3073, July 2009). To achieve capacity, both $B$ and $N$ are required to be sufficiently large.

It is an object of the invention to provide a technology for efficiently generating polarised channels.

The foregoing and other objects are achieved by the features of the independent claims. Further implementation forms are apparent from the dependent claims, the description and the figures.

According to a first aspect, an encoder is provided that is configured to convert at least one original channel to a plurality of output channels using a single polar code. The single polar code is based on a varying fading state of the original channel. The encoder is thus able to convert the original fading channel into output channels via polarisation in such a way that the polarisation takes account of the varying fading state of real-world channels.

The encoder may be configured to convert the original channel to the output channels in a single-stage polarisation operation that converts the original channel to output channels that are dependent on the varying fading state. The encoder is thus able to perform the polarisation more efficiently than existing schemes, which rely on two or more polarisation operations, by mapping the original channel to a set of output channels that have been selected based on the varying fading state of the original channel.

The encoder may be configured to use a polar code in which the output channels are ranked in dependence on a parameter associated with each output channel. The parameter may be based on the varying fading state of the original channel being an output of that channel. Ordering the possible channels in this way enables the best channels to be identified so that optimal use can be made of them.

The parameter may be based on the varying fading state of the original channel having a regular fading distribution. This fading distribution is an appropriate approximation for many different fading scenarios.

The parameter may be based on the varying fading state of the original channel having a continuous fading distribution. A continuous fading distribution covers an infinite number of possible fading scenarios rather than being limited to a finite number of discrete scenarios.

The parameter may be based on a likelihood ratio that has the varying fading state of the original channel as an input. The likelihood ratio provides a practical measure for evaluating the output channels and having the varying fading state of the original channels as an input to the likelihood ratio incorporates that fading state as one of the channel outputs.

The output channels may be ranked based on a quantised channel that approximates the original channel. This provides a practical mechanism for ranking the channels.

The polar code may classify the output channels in dependence on how good they are expected to be for an intended recipient and/or an eavesdropper. The encoder may be configured to map a particular type of data to each output channel in dependence on the classification associated with that channel. This allows optimal use to be made of the different capabilities of the output channels.

The polar code may classify some of the output channels as being good for an intended recipient and bad for an eavesdropper. The encoder may be configured to map information data to the output channels in that classification. This gives the information data the best chance of being successfully received by the intended recipient but not the eavesdropper.

The polar code may classify some of the output channels as being good for an intended recipient and good for an eavesdropper. The encoder may be configured to map random data to the output channels in that classification. This helps to ensure that the wiretap channel is noisier than the main channel.

The polar code may classify some of the output channels as being bad for an intended recipient and good for an eavesdropper. The encoder may be configured to map random data to the output channels in that classification. This introduces artificial noise into the channels that are good for the eavesdropper.

The polar code may classify some of the output channels as being bad for an intended recipient and bad for an eavesdropper. The encoder may be configured to map frozen data to the output channels in that classification. The frozen data is known to both the intended recipient and the eavesdropper so mapping it to the channels that are bad for both parties does not damage the intended recipient's receive operation. It also retains channels that are good for the eavesdropper for the transmission of artificial noise, which can improve secrecy by misleading the eavesdropper.

The original channel may be configured to receive continuous data. This enables efficient operation of the encoder.

The original channel may be configured to receive non-binary data. The encoder may be configured to use a polar code that is a polar lattice. This enables the encoder to handle symbols.

According to a second aspect, a method is provided that comprises converting at least one original channel to a plurality of output channels using a single polar code, wherein the single polar code is based on a varying fading state of the original channel.

The present invention will now be described by way of example with reference to the accompanying drawings. In the drawings:

Figure 1 shows an encoder according to an embodiment of the invention;

Figure 2 is a flowchart showing steps of a method according to an embodiment of the invention;

Figure 3 shows an example of a channel model;

Figure 4 shows an example of a channel model that incorporates fading;

Figure 5 shows the transformation of multiple copies of an original channel into a plurality of output channels;

Figure 6 shows an example of a wiretap channel model;

Figure 7 shows simulation results for the performance of different polar codes;

Figure 8 shows typical boundaries of $A_i$ for channel quantisation; and

Figure 9 shows a comparison between original channels and their quantised approximations.

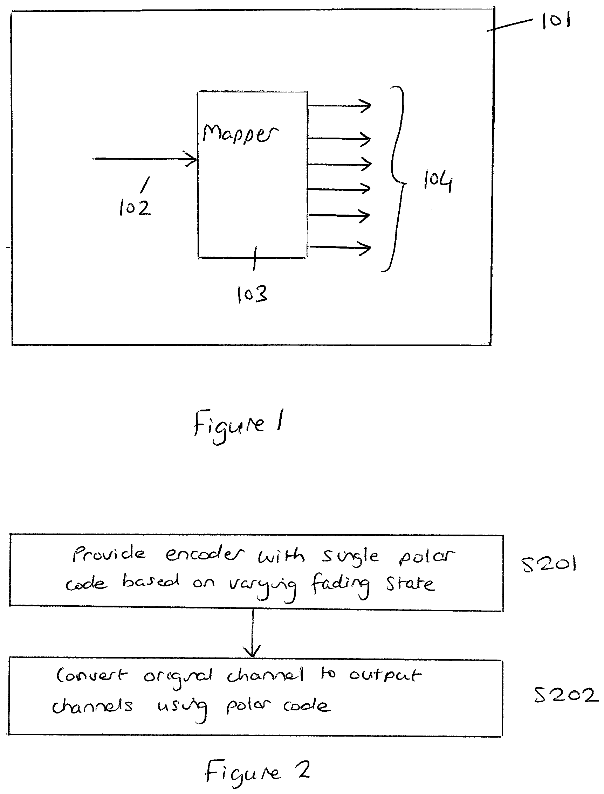

An example of an encoder is shown in Figure 1. The encoder, shown generally at 101, is configured to convert at least one original channel to a plurality of output channels. It does this by receiving input data 102 and mapping it via mapper 103 to a plurality of output channels 103. The encoder is configured to use a single polar code to convert the original channel to the output channels. Essentially the polar code controls the mapping that is implemented by mapper 104. (Figure 1 shows the mapper as receiving serial data and outputting parallel data but that is just an example; the mapper might receive and output any combination of serial and/or output data.) The single polar code is based on a varying fading state of the original channel.

The fading state of the original channel represents the effect that the propagation environment has on a radio signal. The propagation environment typically causes the magnitude of a transmitted signal to vary randomly. This variation usually occurs over time. The random variation can be modelled by an appropriate probability density function, which suitably represents relative likelihood that the signal will have a given magnitude at a particular time. Different probability density functions may be appropriate for different propagation environments. For example, a Rayleigh fading distribution is usually suited to environments in which there are many objects to scatter the radio signal and no dominant propagation along a line of sight between the transmitter and the receiver. If the environment is such that there is a strongly dominant signal at the receiver, usually caused by line of sight, then a Rician fading distribution may be more appropriate.

The encoder shown in Figure 1 is configured to use a polar code that is based on a varying fading state of the original channel. In other words, the polar code is constructed based on a scenario in which the original channel is assumed to have a varying fading state. One way of achieving this is to incorporate an appropriate varying fading model into the model of the original channel that forms the basis for constructing the polar code. For example, the varying fading state can be considered one of the outputs of the original channel. This creates a channel model in which a varying channel gain forms one of its outputs. The channel gain can then be assigned an appropriate fading distribution. This is different from existing techniques, in which the fading state is treated as static. That static fading state is then incorporated into the process of polar code construction via a fixed transition probability assigned to the channel model.

The single polar code used by the encoder is just one polar code, which is capable of generating the output channels by itself. No additional codes are required. The single polar code may, for example, be expressed as a single generator matrix $G_N$. The single polar code is also capable of generating the output channels in one polarisation operation. In other words, the encoder applies the polar code to the original channel and converts that channel into the output channels in one polarisation operation. Those output channels may be BSCs. No intervening stages that convert the original channel into intermediate channels are required.

Both features distinguish the polar code described herein from existing techniques. Those techniques either require the transmitter to have access to CSI so that it can select an appropriate polar code from multiple polar codes that are all designed for a particular static fading state, or they require a different matrix $G_B$ for each fading state to convert the original channel into intermediate BEC channels, before those intermediate BEC channels are in turn combined and split into BSC output channels via a second polarisation operation (see e.g. "Polar Coding for Fading Channels: Binary and Exponential Channel Cases" by Si et al).

Polar codes are typically channel specific, so a polar code based on one channel model will usually be different from a polar code based on another channel model. Consequently, by being configured to use a polar code that is based on a varying fading model, the encoder is configured to use a different polar code from existing encoders. The encoder is suitably provided with a pre-constructed polar code. In some implementations, the encoder may be provided with polar codes based on different fading models. The encoder may be configured to use the polar code that is best suited to its current propagation environment. The encoder may use CSI from the receiver (if it is available) about current channel conditions to select between available polar codes. In other implementations CSI will not be available to the encoder. However, because the polar code is based on a varying fading model, the single polar code described herein can be used successfully across many different fading scenarios.

A broad overview of a method that is implemented by an encoder is shown in Figure 2. In an initial step, the method comprises providing the encoder with a single polar code that is based on a varying fading state of the original channel (step S201). The method also comprises the encoder converting at least one original channel to a plurality of output channels using that single polar code (step S202).

The structures shown in Figure 1 (and all the block apparatus diagrams included herein) are intended to correspond to a number of functional blocks. This is for illustrative purposes only. Figure 1 is not intended to define a strict division between different parts of hardware on a chip or between different programs, procedures or functions in software. In some embodiments, some or all of the techniques described herein may be performed wholly or partly by a processor acting under software control. In some embodiments, some or all of the techniques described herein are likely to be performed wholly or partly in hardware. This particularly applies to techniques incorporating repetitive arithmetic operations, such as mapping. In some implementations, the functional blocks of the encoder are expected to be implemented as dedicated hardware in a transmitter chain.

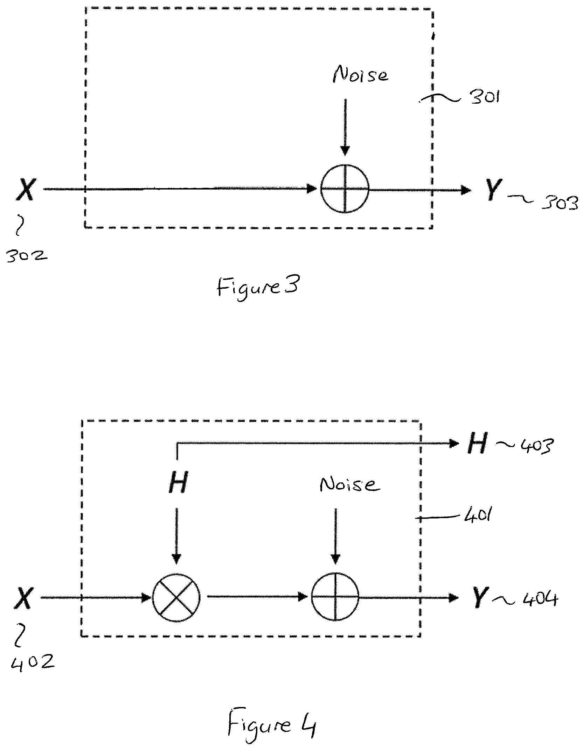

An example of a BMS channel is shown at 301 in Figure 3. The channel may be denoted W. It has an input alphabet $X \in \mathcal{X} = \{0,1\}$ (302) and an output alphabet $Y \in \mathcal{Y} \subseteq \mathbb{R}$ (303). Channel polarisation is a process by which $N$ independent copies of the original channel $\tilde{W}$ are manufactured and converted into a set of $N$ output channels $\left\{\tilde{W}_N^{(i)} : 1 \leq i \leq N\right\}$. These output channels show a polarisation effect in that, as $N$ becomes large, the symmetric capacity terms $C(\tilde{W}_N^{(i)})$ tend towards 0 or 1. The idea behind polar coding is to construct a coding system where each output channel $\tilde{W}_N^{(i)}$ can be accessed individually. Output channels with a capacity near 1 are used to send information data, whereas output channels with a capacity near 0 are used to send "frozen" data (bits known to the transmitter and receiver that are essentially meaningless).

Polar codes are typically channel-specific: a polar code for one channel may not be a polar code for another. Constructing a polar code involves identifying which of the available output channels is best suited to the original channel. This can involve considerations of the original channel's fading state, which may be reflected in its transition probability. Constructing a polar code can also involve identifying which of the available output channels is best suited to carrying different types of data. Those channels that are considered "good", i.e. the "noiseless" channels with a capacity approaching 1, are allocated to information data. In general, constructing a polar code of dimension k can be considered as being equivalent to finding the k best output channels.

There are different techniques available for analysing the relative desirability of different output channels. One option is to calculate the Bhattacharyya parameter. For a BMS channel W with transition probability $P_{Y\backslash X}$, the Bhattacharyya parameter $\tilde{Z} \in [1,0]$ is usually defined as:

$$\tilde{Z}(\widetilde{W}) = \tilde{Z}(X\backslash Y) \triangleq \sum_{y} \sqrt{P_{Y\backslash X}(y\backslash 0)P_{Y\backslash X}(y\backslash 1)}$$

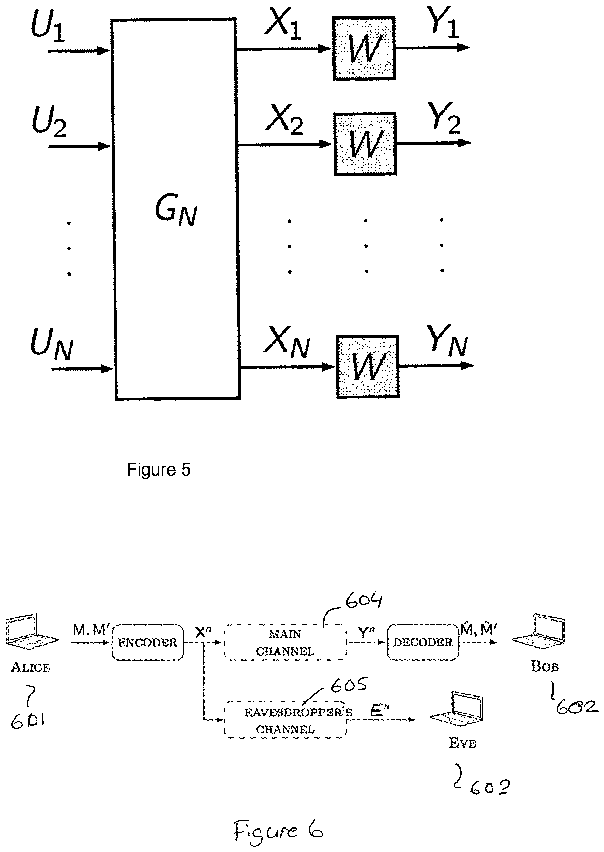

A polar code is constructed by combining multiple copies $\tilde{W}^N$ of a channel $\tilde{W}$ to produce a vector channel $\tilde{W}_N$, which is then split into a set of output channels $\widetilde{W}_N^{(i)}$. This transformation is represented in Figure 5 and can be defined as follows:

$$U^N = X^N G_N$$

Where $U^N$ denotes the input to each output channel $\widetilde{W}_N^{(i)}$.

Each output channel can be defined as:

$$W_i: U_i \rightarrow (Y^N, U^{i-1})$$

Thus, each output channel output by a polar code has a Bhattacharyya parameter that is given by:

$$\tilde{Z}\left(\widetilde{W}_N^{(i)}\right) = \tilde{Z}(U_i\backslash Y^N, U^{i-1}) \triangleq \sum_{y} \sqrt{P_{U_i\backslash Y^N, U^{i-1}}(y\backslash 0)P_{U_i\backslash Y^N, U^{i-1}}(y\backslash 1)}$$

The good output channels can be selected based on the Bhattacharyya parameter. For example, to construct a polar code of dimension k, the k output channels with the lowest corresponding Bhattacharyya parameters may be selected to carry the information data. In one practical example, the information set I may be defined as $\left\{i: \tilde{Z}(\widetilde{W}_N^{(i)}) \leq 2^{-N^\beta}\right\}$ for some $0 < \beta < \frac{1}{2}$. The frozen set is the complement of $\tilde{I}$.

The encoder described herein may be configured to use a polar code that is based on the fading state of the original channel. More specifically, the polar code may be based on a varying fading state of the original channel. The polar code may be constructed to convert the original channel to output channels that are dependent on that varying fading state. In other words, the polar code may be constructed to convert the original channel to output channels that are selected from the possible output channels based on the original channel's varying fading state. This can be achieved by treating the varying fading state as being one of the outputs of the original channel.

Figure 4 shows another example of a BMS channel (401), but in this example the model has been extended so that the channel has an input X (402) and outputs (Y, H) (403, 404), where H represents the varying fading state of the original channel. The fading state of the channel at any given time may be known to the receiver, which has access to Channel State Information (CSI), but is not necessarily known to the transmitter. H is the channel gain. It can be used to represent an expected distribution of the fading state of the original channel. By incorporating H as one of the original channel outputs, a model of the original channel is created that is essentially a hybrid channel: it approximates the real-world channel across all its expected fading states. This hybrid model can form the basis for a polar code that will convert the original channel into a plurality of output channels.

Through polarisation, the original channel's varying fading state also becomes an output of sub-channels generated by the polar code. The fading state should therefore be incorporated into the process of identifying channels that are suitable for constructing the polar code. For example, the Bhattacharyya parameter can be calculated as follows:

$$\tilde{Z}\left(\widetilde{W}_N^{(i)}\right) = \tilde{Z}(U_i \backslash Y^N, U^{i-1}, H) \triangleq \sum_y \sqrt{P_{U_i \backslash Y^N, U^{i-1}, H}(y \backslash 0) P_{U_i \backslash Y^N, U^{i-1}, H}(y \backslash 1)}$$

The Bhattacharyya parameter above can be used to identify the appropriate output channels for the polar code in the same way as any other Bhattacharyya parameter. It can also be used to rank those channels. Different types of data may be allocated to different channels, in dependence on their ranking. For example, some channels may be designated as "good", and thus for information bits, while other channels may be designated as "bad" and thus for frozen bits. The Bhattacharyya parameter is not the only parameter that can be used to assess the relatively desirability of the possible output channels, and other parameters could equally be used. Indeed, the Bhattacharyya parameter can be difficult to calculate in practice. (Some ways in which these practical difficulties can be overcome are described in more detail below.)

The varying fading state may be modelled by any suitable fading distribution. For example, the varying fading state may be modelled by a regular fading distribution. A fading probability density function $f(h)$ is generally termed a "regular fading distribution" if there exists some positive constant $\alpha$ for which $f(h) \propto \dfrac{1}{h^{1-\alpha}}$ for sufficiently small $h > 0$. Possible fading distributions include the Rayleigh distribution, the Rician fading distribution, the Nakagami distribution, the log-normal distribution etc. The varying fading state is preferably modelled by a continuous fading distribution, as this allows an infinite number of fading states to be considered.

An encoder that uses a polar code that is based on a varying fading state does not need to have access to channel state information. So long as the polar code approximates the distribution of different fading states in the original channel, the encoder can use that single polar code whatever the fading state of the original channel at the time.

Basing the polar code on the varying fading state of the original channel also enables a single polar code to generate the appropriate output channels. This is an improvement over existing techniques that require a different polar code for each expected fading state (so that each polar code is based on a single, static fading state). The single polar code has a length of $N$, which is equivalent to standard polar codes and results in an encoding and decoding complexity of $O(Nlog(N))$. Existing techniques that consider multiple fading states have a length of $NB$ and an encoding and decoding complexity of $O(NBlog(NB))$. Those techniques also require at least two stages of polarisation. An encoder that uses the single polar code described herein, however, deals with varying fading using a single polar code, meaning a single-stage polarisation operation. The encoder is furthermore able to deal with an infinite number of fading states rather than being limited to a finite number of fading states.

One application in which the encoder may be advantageously used is in securing a transmission against wiretapping. Security, privacy and reliability of information exchanged over wireless radio channels is a major societal challenge. Data integrity and privacy are major industrial challenges for operators and administrations. The design of codes for wiretap channels has proved to be particularly challenging. Figure 6 shows an example of a typical wiretap channel model.

In the wiretap channel model shown in Figure 6, Alice (601) wants to send a message to Bob (602), who is therefore the legitimate recipient. An eavesdropper, Eve (603), is also trying to listen to the message via an eavesdropper's channel (605). The confidential message M is encoded by Alice into an $N$-dimensional codeword $X^{[N]}$. Both channels are assumed to be subject to fading. The outputs $Y^{[N]}$ and $E^{[N]}$ received by Bob and Eve are given by:

$$\begin{cases} Y^{[N]} = H_Y^{[N]} * X^{[N]} + W_b^{[N]} \\ E^{[N]} = H_E^{[N]} * X^{[N]} + W_e^{[N]} \end{cases}$$

where $H_Y^{[N]}$ and $H_E^{[N]}$ are $N$-dimensional independent and identically distributed (i.i.d) fading coefficient vectors, "*" denotes the element-wise multiplication, and $W_b^{[N]}$ and $W_e^{[N]}$ are $N$-dimensional i.i.d. Gaussian noise vectors with variances $\sigma_b^2$ and $\sigma_e^2$, respectively. It is assumed that $H_Y$ and $H_E$ follow the same fading distribution, namely $P_{H_Y}(h) = P_{H_E}(h)$ and $\sigma_e^2 > \sigma_e^2$. The instantaneous realization of $H_E$ can be stronger than that of $H_Y$. The estimation $\hat{M}$ of $M$ is obtained from $H_Y^{[N]}$ and $Y^{[N]}$ by the decoder at Bob's end.

A goal of wiretap coding is to design a coding scheme that makes it possible for Alice and Bob to communicate both reliably and securely. One measure of reliability is the decoding error probability for Bob. The reliability criterion can require a vanishing decoding error probability for Bob as the block length $N$ goes to infinity, namely

$$\lim_{N \to \infty} \Pr(\hat{M} \neq M) = 0.$$

Secrecy can be measured as the mutual information between the original message M and the signal received by Eve. The strong secrecy criterion requires a vanishing information leakage

$$\lim_{N \to \infty} I(M; H_Z^{[N]}, E^{[N]}) = 0$$

to Eve. The secrecy capacity is defined as the maximum achievable rate under these two criteria.

It can be shown that the polar code based on a varying fading state can achieve the secrecy condition. First it is assumed that $V_m$ and $V_w$ (the main channel and the wiretap channel respectively) are both binary-input memoryless symmetric channels (BMSCs). In this scenario, $X \in [-1,+1]$ is the BPSK modulated binary-input signal. Let $V_m{:}X \to (Y, H_Y)$ and $V_w{:}X \to (E, H_E)$ denote the main channel and the wiretapper's channel, respectively. When $V_m$ and $V_w$ are both symmetric and $V_w$ is degraded with respect to $V_m$, the secrecy capacity is given by:

$$C_S = C(V_m) - C(V_w)$$

Where $C(\ )$ denotes channel capacity.

The channel degradation result still holds when $H_Y = H_E$. This refers to the simultaneous fading model, i.e., both the main and the wiretapper's channels experience the same fading states. This model describes a physically degraded channel, where Eve observes the output of the main channel through an additional noisy channel. In this scenario, the secrecy capacity can be achieved if input X is uniformly distributed.

The general polar wiretap coding technique can be extended to binary-input fading wiretap channels. As before, the varying fading state is treated as being part of the channel outputs. After channel combination and splitting into $N$ independent uses of $V_m$ and $V_w$ by the polarization transform $U^{[N]} = X^{[N]}G_N$, the sets of channel indices that show good reliability for intended recipient Bob and poor information-content for eavesdropper Eve can be defined as:

$$G(V_m) = \left\{ i \in [N]: \tilde{Z}\left(V_{m,N}^{(i)}\right) = \tilde{Z}(U^i | U^{1:i-1}, Y^{[N]}, H_Y^{[N]}) \leq 2^{-N^\beta} \right\},$$

$$P(V_w) = \left\{ i \in [N]: \tilde{Z}\left(V_{w,N}^{(i)}\right) = \tilde{Z}(U^i | U^{1:i-1}, Z^{[N]}, H_Z^{[N]}) \leq 2^{-N^\beta} \right\},$$

where $0 < \beta < 0.5$, and $\tilde{Z}(U^i | U^{1:i-1}, Y^{[N]}, H_Y^{[N]})$ and $\tilde{Z}(U^i | U^{1:i-1}, E^{[N]}, H_E^{[N]})$ are the Bhattacharyya parameters of the $i$-th sub-channel of the main channel and the wiretapper's channel, respectively. Since $V_m$ and $V_w$ are both BMSCs, degrading and upgrading merging algorithms can be used to estimate $\tilde{Z}(U^i | U^{1:i-1}, Y^{[N]}, H_Y^{[N]})$ and $\tilde{Z}(U^i | U^{1:i-1}, Z^{[N]}, H_Z^{[N]})$ to an acceptable arbitrary accuracy. (These degrading and upgrading merging algorithms are described in more detail below).

For the index $i \in N(V_w)$ and sufficiently large $N$, this gives:

$$I(U^i | U^{1:i-1}, E^{[N]}, H_E^{[N]}) \leq \sqrt{1 - \tilde{Z}(U^i | U^{1:i-1}, E^{[N]}, H_E^{[N]})^2}$$

$$\leq \sqrt{2 \cdot 2^{-N^\beta}}$$

$$\leq 2^{-N^{\beta\prime}}$$

Therefore, the mutual information of each sub-channel in $P(V_w)$ vanishes as $N$ increases. This is the key to achieving strong secrecy. The single polar code described herein is thus able to achieve the strong secrecy condition, whereas existing multiple fading state techniques are only able to guarantee weak secrecy.

The output channels can be classified in dependence on how good they are expected to be for an intended recipient and/or an eavesdropper. The encoder is preferably configured to map a particular type of data to each output channel in dependence on the classification associated with that channel. This mapping may be an inherent part of the polar code and its construction. All the encoder has to do is supply the appropriate type of data to each code "input", e.g. by arranging the data into a particular order for multiplying by the generator matrix $G_N$ of the polar code.

The classification can be achieved by dividing the index set [N] into groups. For the eavesdropping scenario shown in Figure 6, the following four sets might be appropriate:

$$A = G(V_m) \cap P(V_w), B = G(V_m) \cap P(V_w)^c$$

$$C = G(V_m)^c \cap P(V_w), D = G(V_m)^c \cap P(V_w)^c$$

Note that $A \cup B \cup C \cup D = [N]$.

The different sets may be mapped to different types of data. Any mapping could be used, but a particularly advantageous mapping follows. Set A is formed from output channels that are classified as being both good for intended recipient Bob and poor for eavesdropper Eve. These channels are preferably used to carry message bits *M*. Set B is formed from output channels that are classified as being both good for intended recipient Bob and good for eavesdropper Eve. These channels are preferably used to carry random bits *R*. These are meaningless bits that are unknown to Bob and Eve prior to transmission. Set C is formed from output channels that are classified as being both bad for intended recipient Bob and bad for eavesdropper Eve. These channels are preferably used to carry frozen bits *F*. These frozen bits will typically be known to both Bob and Eve prior to transmission. Set D is formed from output channels that are classified as being both bad for intended recipient Bob and good for eavesdropper Eve. These channels are preferably used to carry random bits *R*. Random bits are preferably mapped to channels that are good for eavesdropper Eve (in preference to frozen bits, say) to add artificial noise that: (i) ensures that the wiretap channel is always noisier than the main channel; and (ii) confuses receipt of the original message by the eavesdropper. This helps to realise a secrecy capacity.

Let $U^A$ and $U^C$ denote independent and uniform versions of message *M* and frozen bits *F* respectively. The information leakage $I(M; H_E^{[N]}, E^{[N]})$ can be upper-bounded as:

$$I\left(M; H_E^{[N]}, E^{[N]}\right) \leq I(MF; H_E^{[N]}, E^{[N]})$$

$$\leq I(U^A U^C; H_E^{[N]}, E^{[N]})$$

$$\leq \sum_{j=1}^{|A \cup C|} I(U^{i_j}; H_E^{[N]}, E^{[N]} | U^{i_1}, \ldots U^{i_{j-1}})$$

$$\leq \sum_{j=1}^{|A \cup C|} I(U^{i_j}; H_E^{[N]}, E^{[N]}, U^{i_1}, \ldots U^{i_{j-1}}),$$

$$\leq \sum_{j=1}^{|A \cup C|} I\left(U^{i_j}; H_E^{[N]}, E^{[N]}, U^{1:i_j-1}\right),$$

$$\leq N \cdot 2^{-N^{\beta'}}$$

The second inequality holds because the induced channel from *MF* to $(H^{[N]}, E^{[N]})$ is symmetric when output channel sets B and D are fed with random bits. The maximum mutual information is achieved by a uniform input distribution.

The scheme described above is able to achieve the secrecy capacity. The proportions $\frac{G(V_m)}{N}$ and $\frac{P(V_w)}{N}$ approach $C(V_m)$ and $1 - C(V_m)$ respectively when *N* goes to infinity. Ignoring any unpolarized channels (due to the non-infinite nature of *N* in reality), $P(V_w)^c$ is almost contained in $G(V_m)$. This gives:

$$\lim_{N\to\infty} \frac{|G(V_m) \cap (V_w)|}{N} = C(V_m) - C(V_w).$$

The proportion of set D is arbitrarily small when *N* is sufficiently large. This is because D is a subset of the unpolarised set. The reliability condition may not be fulfilled under conventional successive cancellation decoding due to the existence of D. This can be addressed by using Markov block coding to achieve reliability and strong secrecy simultaneously.

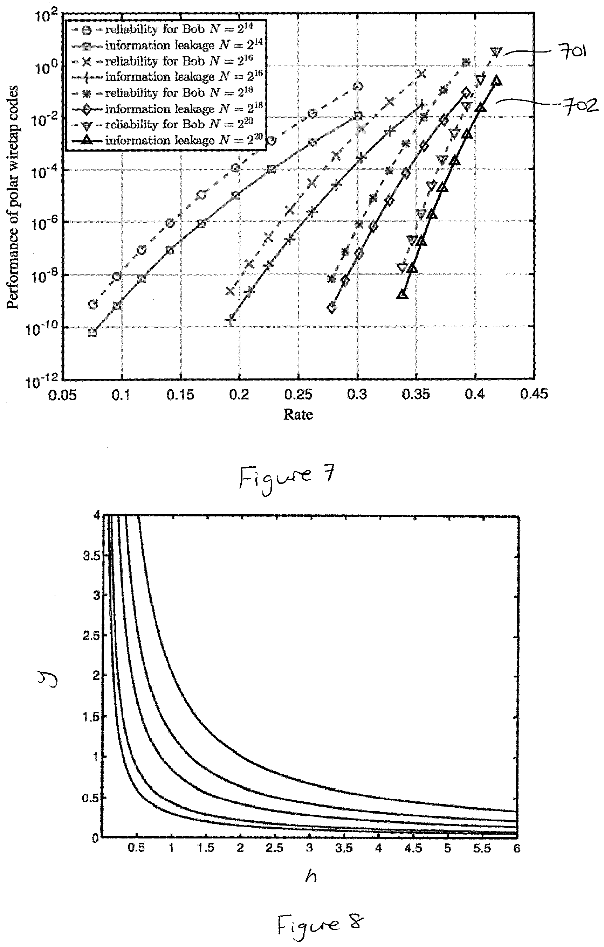

Figure 7 shows simulation results of polar codes with different block lengths. These simulation results were obtained by choosing Rayleigh fading wiretap channels with $\sigma_b = 1$, $\sigma_e = 3$ and $\sigma_h = 1.2575$. Figure 7 shows that when the date rate is 0.34 and the block length is $N = 2^{20}$ (as represented by lines 701 and 702), the upper-bound of the block error probability for Bob is around $10^{-8}$, and the information leakage for Eve is less than $10^{-9}$ bit.

The Bhattacharyya parameter is an example of one measure that can be used to assess the relative desirability of the different sub-channels generated by a polar code. $\tilde{Z}\left(V_{m,N}^{(i)}\right)$ can be evaluated recursively for BECs, starting with the initial Bhattacharyya parameter $\tilde{Z}(\tilde{V})$. However, for general BMSCs it is difficult to calculate $\tilde{Z}\left(V_{m,N}^{(i)}\right)$ directly because of the exponentially increase in the size of the output alphabet of $\left(V_{m,N}^{(i)}\right)$. One way of addressing this is to apply degrading and upgrading merging algorithms to estimate $\tilde{Z}\left(V_{m,N}^{(i)}\right)$ within acceptable accuracy.

In practice, the two approximations from the degrading and upgrading processes are rather close. The description below therefore focusses on the degrading transform for brevity.

The likelihood ratio (LR) of a channel such as that shown in Figure 4 (*y,h*) can be defined as:

$$LR(y,h) \triangleq \frac{P_{Y,H|X}(y,h|+1)}{P_{Y,H|X}(y,h|-1)}.$$

The likelihood ratio thus has the varying fading state of the original channel as an input. For a fading channel, we have $LR(y,h) = e^{\frac{2yh}{\sigma^2}}$ · $LR(y,h) \geq 1$ for any y ≥ 0. Each $LR(y,h)$ corresponds to a BSC with crossover probability $\frac{1}{LR(y,h)+1}$. Its capacity is given by:

$$C[LR(y,h)] \triangleq 1 - h_2\left(\frac{1}{LR(y,h)+1}\right),$$

where $h_2(\cdot)$ is the binary entropy function.

The fading channel $\tilde{V}$ can be approximated by a quantised channel. For example, the channel may be quantised based on $C[LR(y,h)]$. Let $\mu = 2Q$ be the alphabet size of the degraded channel output alphabet. The set $\{y \geq 0, h \geq 0\}$ is divided into $Q$ subsets:

$$A_i = \left\{y \geq 0, h \geq 0 : \frac{i-1}{Q} \leq C[LR(y,h)] \leq \frac{i}{Q}\right\}$$

for $1 \leq i \leq Q$. Typical boundaries of $A_i$ are depicted in Figure 8. The outputs in $A_i$ are mapped to one symbol and V is quantized to a mixture of $Q$ BSCs with the crossover probability:

$$p_i = \frac{\int_{A_i} P_{Y,H|X}(y,h|-1)dydh}{\int_{A_i} P_{Y,H|X}(y,h|+1)dydh + \int_{A_i} P_{Y,H|X}(y,h|-1)dydh}$$

Note that $p_i$ can be numerically evaluated. Since $R(y,h) = e^{\frac{2yh}{\sigma^2}}$, $A_i$ can be rewritten as:

$$A_i = \left\{ y \geq 0, h \geq 0 : \frac{\sigma^2}{2}\ln\left(\frac{1}{h_2^{-1}\left(\frac{Q-i+1}{Q}\right)} - 1\right) \leq yh < \frac{\sigma^2}{2}\ln\left(\frac{1}{h_2^{-1}\left(\frac{Q-i}{Q}\right)} - 1\right)\right\}$$

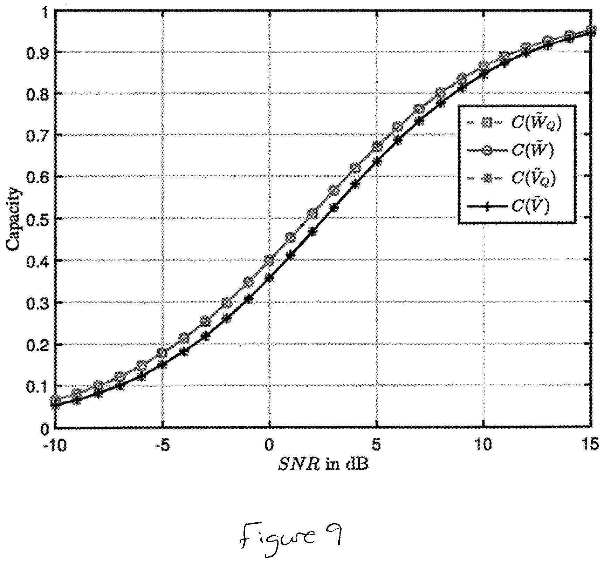

A comparison between the quantized channels and the original channels for different SNR when $Q = 128$ is shown in Figure 9. When $Q$ is sufficiently large, the quantized channel can be used to approximate the fading channel in the construction of polar codes. The size of the output alphabet after the degrading merging is no more than $2Q$.

The description above focusses on an implementation in which the main channel and the wiretap channel are assumed to have the same fading distribution. The invention is not limited to this. The same techniques can be readily extended to implementations in which the main channel and the wiretap channel are assumed to have different fading distributions by appropriately adapting the mathematics.

The description above also focusses on an implementation in which the encoder is configured to receive a binary input. The construction of the polar code is described accordingly. In practice the encoder is likely to also have non-binary settings, so that it can also be configured to handle symbols. The same techniques can be readily extended to handle symbols by constructing a polar code "stack". This stack can also be termed a "polar lattice". The polar lattice may be combined with lattice Gaussian shaping (which preserves many of the properties of the optimal input distribution for fading channels, namely the continuous Gaussian distribution) to achieve the desired secrecy capacity. This implementation is useful in applications in which the encoder is power-constrained.

Using the techniques described above a single polar code can be constructed that is addresses the varying fading state of most real-world channels. This single code is sufficient to achieve the ergodic capacity, which simplifies the coding design since the encoder need only implement one phase of polarisation. The encoder also has no need for CSI. The resulting polar codes have been shown to achieve capacity and to also provide strong secrecy, with the result that their use can be extended to wiretap channels.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein, and without limitation to the scope of the claims. The applicant indicates that aspects of the present invention may consist of any such individual feature or combination of features. In view of the foregoing description it will be evident to a person skilled in the art that various modifications may be made within the scope of the invention.

**Claims**

1. An encoder configured to convert at least one original channel to a plurality of output channels using a single polar code, wherein the single polar code is based on a varying fading state of the original channel.

2. An encoder as claimed in claim 1, wherein the encoder is configured to convert the original channel to the output channels in a single-stage polarisation operation that converts the original channel to output channels that are dependent on the fading state.

3. An encoder as claimed in claim 1 or 2, wherein the encoder is configured to use a polar code in which the output channels are ranked in dependence on a parameter associated with each output channel, wherein said parameter is based on the varying fading state of the original channel being an output of that channel.

4. An encoder as claimed in claim 3, wherein the parameter is based on the varying fading state of the original channel having a regular fading distribution.

5. An encoder as claimed in claim 3, wherein the parameter is based on the varying fading state of the original channel having a continuous fading distribution.

6. An encoder as claimed in any of claims 3 to 5, wherein the parameter is based on a likelihood ratio that has the varying fading state of the original channel as an input.

7.  An encoder as claimed in any of claims 3 to 6, wherein the output channels are ranked based on a quantised channel that approximates the original channel.

8.  An encoder as claimed in any preceding claim, wherein the polar code classifies the output channels in dependence on how good they are expected to be for an intended recipient and/or an eavesdropper and the encoder is configured to map a particular type of data to each output channel in dependence on the classification associated with that channel.

9.  An encoder as claimed in any preceding claim, wherein the polar code classifies some of the output channels as being good for an intended recipient and bad for an eavesdropper, the encoder being configured to map information data to the output channels in that classification.

10. An encoder as claimed in any preceding claim, wherein the polar code classifies some of the output channels as being good for an intended recipient and good for an eavesdropper, the encoder being configured to map random data to the output channels in that classification.

11. An encoder as claimed in any preceding claim, wherein the polar code classifies some of the output channels as being bad for an intended recipient and good for an eavesdropper, the encoder being configured to map random data to the output channels in that classification.

12. An encoder as claimed in any preceding claim, wherein the polar code classifies some of the output channels as being bad for an intended recipient and bad for an eavesdropper, the encoder being configured to map frozen data to the output channels in that classification.

13. An encoder as claimed in any preceding claim, wherein the original channel is configured to receive continuous data.

14. An encoder as claimed in any preceding claim, wherein the original channel is configured to receive non-binary data and the encoder is configured to use a polar code that is a polar lattice.

15. A method comprising converting at least one original channel to a plurality of output channels using a single polar code, wherein the single polar code is based on a varying fading state of the original channel.

**Amended claims in accordance with Rule 137(2) EPC.**

1.  An encoder configured to convert at least one original channel to a plurality of output channels using a single polar code, wherein the single polar code is based on a varying fading state of the original channel;
    wherein the encoder is configured to use a polar code in which the output channels are ranked in dependence on a parameter associated with each output channel, wherein said parameter is based on the varying fading state of the original channel being an output of that channel;
    **characterized in that** the output channels are ranked based on a quantised channel that approximates the original channel.

2.  An encoder as claimed in claim 1, wherein the encoder is configured to convert the original channel to the output channels in a single-stage polarisation operation that converts the original channel to output channels that are dependent on the fading state.

3.  An encoder as claimed in claim 1, wherein the parameter is based on the varying fading state of the original channel having a regular fading distribution.

4.  An encoder as claimed in claim 1, wherein the parameter is based on the varying fading state of the original channel having a continuous fading distribution.

5.  An encoder as claimed in any of claims 2 to 4, wherein the parameter is based on a likelihood ratio that has the varying fading state of the original channel as an input.

6. An encoder as claimed in any preceding claim, wherein the polar code classifies the output channels in dependence on how good they are expected to be for an intended recipient and/or an eavesdropper and the encoder is configured to map a particular type of data to each output channel in dependence on the classification associated with that channel.

7. An encoder as claimed in any preceding claim, wherein the polar code classifies some of the output channels as being good for an intended recipient and bad for an eavesdropper, the encoder being configured to map information data to the output channels in that classification.

8. An encoder as claimed in any preceding claim, wherein the polar code classifies some of the output channels as being good for an intended recipient and good for an eavesdropper, the encoder being configured to map random data to the output channels in that classification.

9. An encoder as claimed in any preceding claim, wherein the polar code classifies some of the output channels as being bad for an intended recipient and good for an eavesdropper, the encoder being configured to map random data to the output channels in that classification.

10. An encoder as claimed in any preceding claim, wherein the polar code classifies some of the output channels as being bad for an intended recipient and bad for an eavesdropper, the encoder being configured to map frozen data to the output channels in that classification.

11. A method comprising converting at least one original channel to a plurality of output channels using a single polar code, wherein the single polar code is based on a varying fading state of the original channel; wherein the encoder is configured to use a polar code in which the output channels are ranked in dependence on a parameter associated with each output channel, wherein said parameter is based on the varying fading state of the original channel being an output of that channel; wherein the output channels are ranked based on a quantised channel that approximates the original channel.

Mapper

102

103

104

101

Figure 1

Provide encoder with single polar code based on varying fading state

S201

Convert original channel to output channels using polar code

S202

Figure 2

Noise

X

~ 302

~ 301

Y ~ 303

Figure 3

H ~ 403

H

Noise

~ 401

X

~ 402

Y ~ 404

Figure 4

$U_1$ → [ ] → $X_1$ → $W$ → $Y_1$

$U_2$ → [ ] → $X_2$ → $W$ → $Y_2$

$G_N$

$U_N$ → [ ] → $X_N$ → $W$ → $Y_N$

Figure 5

ALICE → M, M' → ENCODER → $X^n$ → MAIN CHANNEL (604) → $Y^n$ → DECODER → $\hat{M}, \hat{M}'$ → BOB

601

EAVESDROPPER'S CHANNEL (605) → $E^n$ → EVE

602

603

Figure 6

Figure 7

Figure 8

Figure 9

Europäisches
Patentamt

European
Patent Office

Office européen
des brevets

# EUROPEAN SEARCH REPORT

Application Number

EP 17 15 8897

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Mengfan Zheng ET AL: "Polar Coding for Secure Transmission in MISO Fading Wiretap Channels", <br><br> , <br> 10 November 2014 (2014-11-10), <br> XP055406025, <br> Retrieved from the Internet: <br> URL:https://arxiv.org/pdf/1411.2463.pdf | 1-10,12, 13,15 | INV. <br> H03M13/13 |
| Y | * section V "Polar Coding Scheme"; figure 4 * <br> * section VI "Simulation Results" * <br> ----- | 11 | |
| Y | HESSAM MAHDAVIFAR ET AL: "Achieving the Secrecy Capacity of Wiretap Channels Using Polar Codes", <br> ARXIV.ORG, CORNELL UNIVERSITY LIBRARY, 201 OLIN LIBRARY CORNELL UNIVERSITY ITHACA, NY 14853, <br> 21 July 2010 (2010-07-21), XP080489396, <br> DOI: 10.1109/TIT.2011.2162275 <br> * figure 2 * <br> ----- | 11 | |
| X | LIU LING ET AL: "Polar Codes and Polar Lattices for Independent Fading Channels", IEEE TRANSACTIONS ON COMMUNICATIONS, IEEE SERVICE CENTER, PISCATAWAY, NJ. USA, <br> vol. 64, no. 12, December 2016 (2016-12), <br> pages 4923-4935, XP011637103, <br> ISSN: 0090-6778, DOI: <br> 10.1109/TCOMM.2016.2613109 <br> [retrieved on 2016-12-15] <br> * abstract * <br> * Section I "Introduction" * <br> * Section I.A: "Our Contribution" * <br> * Section III "Polar Codes for binar-Input Fading Channels" * <br> ----- | 1-7, 13-15 | **TECHNICAL FIELDS SEARCHED (IPC)** <br><br> H03M |

The present search report has been drawn up for all claims

| Place of search | Date of completion of the search | Examiner |
|---|---|---|
| Munich | 14 September 2017 | Farman, Thomas |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

 

& : member of the same patent family, corresponding
  document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SI et al.** Polar Coding for Fading Channels: Binary and Exponential Channel Cases. *IEEE Trans. Commun.,* August 2014, vol. 62 (8), 2638-2650

- **ARIKAN.** Channel polarisation: A method for constructing capacity achieving codes for symmetric binary input memoryless channels. *IEEE Trans. On Information Theory,* July 2009, vol. 59 (12), 3051-3073
- **SI.** *Polar Coding for Fading Channels: Binary and Exponential Channel Cases*